# EUROPEAN PATENT SPECIFICATION

(11) **EP 1 532 773 B1**
(45) Date of publication and mention of the grant of the patent: **05.09.2007**
(21) Application number: 03762953.2
(22) Date of filing: 03.07.2003
(51) Int. Cl.: H04L 12/46, H04L 29/06, G06F 15/17

(54) **A FILTER FOR TRAFFIC SEPARATION**
FILTER ZUR VERKEHRSTRENNUNG
FILTRE POUR LA SEPARATION DU TRAFIC

(30) Priority: 05.07.2002 SE 0202125
(43) Date of publication of application: 25.05.2005
(73) Proprietor: Packetfront Sweden AB, 126 53 Hägersten (SE)
(72) Inventor: NYMAN, Fredrik, S-192 75 Sollentuna (SE); ÖMAN, Andreas, S-128 46 Bagarmossen (SE); LUNDSTRÖM, Magnus, S-165 75 Hässelby (SE); GUNNARSSON, Anton, S-187 53 Täby (SE)
(74) Representative: Nilsson, Brita Linnea
(86) International application number: PCT/SE2003/001161
(87) International publication number: WO 2004/006513

(56) References cited:
- WO-A2-02/19056
- US-A- 6 047 325
- US-A1- 2002 052 972
- US-A1- 2002 080 800
- US-B1- 6 405 248

## Description

### Technical field

The present invention pertains to a filter for an open system interface layer2 traffic separation in at least one router in a network, and a method therefore.

### Background art

When deploying network devices such as routers and switches for an Ethernet ® based network or the like network, the current OSI layer2 (Open Systems Interconnection), deploying MAC addressing (Media Access Control adressing), technology enables VLANs (Virtual Local Area Networks) to be used for separating physical ports in a device, such as router and switch on layer2, and to bind ports belonging to the same VLAN together over multiple devices, so called "trunking".

On OSI layer3, deploying IP addressing through routers, each VLAN require a different IP subnet for addressing. Over the past few years several attempts have been made in using this technology to deploy a broadband network.

Ethernet ® is a shared media according to CSMA/CD (Carrier Sense Multiple Access with Collision Detect), which means that all hosts that are connected to one and the same Ethernet ® get all traffic, but they select it in dependence of their MAC address.

A typical broadband network consist of a number of switches or routers deployed in a residential area to connect individual households to a common infrastructure, the so called service provider infrastructure.

By using Ethernet technology to accomplish this, it immediately introduces a security problem of connecting different premises such as households and the like to a single shared infrastructure as Ethernet provides.

A service provider has to consider:
- Connecting each customer to a separate VLAN - thereby requiring numerous small IP subnets, one for each VLAN to preserve layer2 separation,
- Connecting customers to a single VLAN - thereby requiring a single, larger IP subnet, but introducing the risk of allowing layer2 access between different customers, for example, Microsoft ® file-sharing.

To solve this filtering problem some implementations use port protection features where traffic between two ports in the same device are comprised in the same VLAN is prevented. This means that the hosts connected on those ports are unable to exchange any traffic. Further enhancements to this type of solution has included forwarding packets between the protected ports to an upstream filtering device that makes a decision if data packet traffic should be permitted, and if so, forwarding the traffic back to its destination. This will of course put more load on the backbone link used between the switch and the filtering device.

With a current increase in the number of connected computers to Ethernet ® networks, problem regarding data traffic collision growths. In order to solve this problem, bridges where invented, which divide an Ethernet ® in several segments and remembered/learned in which segments the different MAC addresses resided. Thereafter forwarding of packets is only accomplished of packets that where aimed to the broadcast address or to a MAC address that resides in another segment than it was transmitted from. But the different segments are still part of the same broadcast domain.

Current switches are further developments of the bridge. They could be said to have a bridge in every port. The switch remembers/learns which MAC addresses that reside on every port, respectively, and achieves forwarding between ports only if the traffic is intended for a MAC address on a different port. Every port thus becomes a segment, but every port (al segments) are still a part of the same broadcast domain, as a broadcast is transmitted to every port. An advantage with a switch is that it communicates in high speeds which accomplishes that a number of ports can communicate with each other at the same time with maximum speed.

Switching technique has progressed, e.g. through the introduction of VLAN, trunking and spanning-tree.

VLAN makes it possible to group ports in a switch to different broadcast domains. It involves that the ports comprised in a specific VLAN are unable to communicate with ports in a different VLAN. At least not through layer2, which calls for a router to connect such ports.

In RFC1027 (Request For Comment document under the control of IETF; Internet Engineering Task Force) a technique known as "Proxy-ARP" is described, in which a routing device responds to ARP requests for any address outside the local subnet requested by a locally connected host, thereby making the host send all traffic to the router without requiring the understanding of an IP default-route. This was used in the early days of the Internet to guide hosts in lack of a complete understanding of IP to communicate using the IP protocol. It is rarely used today.

### Summary of the described invention

US-A1-2002/0080800 discloses a VLAN data switching method using an ARP packet in VLAN constructed with one IP subnet. Data transfer delay time as well as router load are reduced.

WO-A2-02/19056 discloses methods, apparatus and data structures for preserving address and service level information in a VPN. A new layer 3 address is used to encapsulate a network-bound packet so that its context information, from which a layer 2 address can be derived, is preserved.

US-A1-2002/0052972 discloses a communication method among a plurality of VLANs in an identical IP subnet. If a switching router receives a broadcast packet form a source host, it transmits the broadcast packet to all the VLANs to which the source host is included as well as to another VLAN to which a destination host is included, and thus a broadcast domain can be formed.

US-B1-6405248 discloses a monitoring system for determining accurate topology features of a network.

US-A-6047325 discloses a network device for supporting construction of VLANs on arbitrary local and wide area computer networks.

The present invention aims to solve problems related to OSI layer2 broadcasting and the limited possibility to divide IP addresses into subsets for a plurality ofVLANs.

In order to achieve its goals and aims, the present invention sets forth a filter for an open system interconnection layer2 traffic separation in at least one Access Switching Router in a network. The ports in the routers are configured to the same virtual local area network. The filter is filtering data packet traffic to the ports. It further comprises:
means for intercepting layer2 traffic from a network connected source device for a MAC-address belonging to the virtual local area network, determining if traffic is permitted to be forwarded to other ports;
means for intercepting Address Resolution Protocol broadcasts in such traffic, responding to the broadcast to the source device regardless of if a destination device layer2 domain is the same as source device layer2 domain, the source device thus determining that the broadcast has acknowledged the layer2 address of a sought destination device, whereby the source device transmits data packets to the destination device, the router receiving the transmitted data packets;
means for determining the egress port to the destination device;
means for determining the layer2 address of the destination device;
means for adjusting the layer2 header from the received data packet, the means for setting the source layer2 address, setting the a router source address for the data packets, the means for determining the layer2 address of the destination device, setting the destination layer2 address to that of the destination device, transmitting the data packet to the destination device; and
thus simulating that if the source device and destination device is in the same layer2 domain, the router layer2 address is the actual destination address both for the source and destination device, or simulating that if the source device and destination device are not in the same layer2 domain but in the same layer3 subnet, the router layer2 address is the actual destination layer2 address for the source to the destination.

In one embodiment of the present invention it is provided that a port that resides in a sub router is provided with said routers layer2 address when addressing the destination device.

Another embodiment provides that a router is investigating the source and/or destination address to determine the best exit port for the packet, to determine if the packet is in profile for rate-limiting, or to do other filtering based on information in the open system interconnection layer3 and higher protocol layers.

A further embodiment provides that the Access Switching Router is a combination of a layer2 switch and a layer3 router, combining the capabilities of layer2 switching with advanced packet control and forwarding decisions in a layer3 router.

A still further embodiment is providing the use of IP subnet, spreading it over several premises and a multiple of Access Switching Router and the same subnet in multiple layer2 domains, thus covering more customers. Yet another embodiment is providing a customer having multiple computers to receive more addresses.

The present invention also sets forth a method for a filter in an open system interconnection layer2 traffic separation in at least one Access Switching Router in a network. A router having ports in the routers configured to the same virtual local area network. The filter is filtering data packet traffic to the ports. It further comprises the steps of:
intercepting layer2 traffic from a network connected source device (HostA, HostB) for a Media Access Control address belonging to the virtual local area network, determining if traffic is permitted to be forwarded to other ports;
intercepting Address Resolution Protocol broadcasts in such traffic, responding to the broadcast to the source device regardless of if a destination device layer2 domain is the same as source device layer2 domain, the source device thus determining that the broadcast has acknowledged the layer2 address of a sought destination device, whereby the source device transmits data packets to the destination device, a router receiving the transmitted data packets;
determining the egress port to the destination device;
determining the layer2 address of the destination device;
adjusting the layer2 header from the received data packet, the means for setting the source layer2 address, setting the routers source address for the data packets, the means for determining the layer2 address of the destination device, setting the destination layer2 address to that of the destination device, transmitting the data packet to the destination device; and
thus simulating that if the source device and destination device is in the same layer2 domain, the router layer2 address is the actual destination address both for the source and destination device, or simulating that if the source device and destination device are not in the same layer2 domain but in the same layer3 subnet, the router layer2 address is the actual destination layer2 address for the source to the destination.

It is appreciated that the method is able to perform the steps of the attached set of dependent method claims conforming to the above described embodiments.

### Brief description of the drawings

Henceforth reference is had to the accompanying drawings for a better understanding of given examples and embodiments of the present invention, whereby:
Fig. 1 schematically illustrates a residential area connected to a broadband network in accordance with prior art;
Fig. 2 schematically illustrates a gateway connected between two broadband networks in accordance with prior art; and
Fig. 3 schematically illustrates a broadband network in accordance with the present invention.

### Detailed description of preferred embodiments

In order to be able to understand the solution, in accordance with the present invention, to problems related to layer2 data traffic, it is also important to understand the fundamental features of IP addressing. A fundamental part of using Ethernet ® for IP communication is the use of the ARP (Address Resolution Protocol) protocol. ARP is used to resolve between OSI layer2 and layer3 addresses. It enables hosts to determine the layer2 address of another device when the layer3 address is already known. This is used when a host on an IP subnet intends to communicate with another host on that same subnet. The ARP is thus used for interpretation between layer2 addresses (Ethernet ® MAC addresses) and layer3 addresses (IP)

A fundamental part of IP is that not every device in a network needs to know about a provided global routing table. If a device has a packet to forward to an unknown destination, the device may be configured with a default-route a path to use for any traffic for which there is not an explicit route. The default route is always an IP address on a subnet that the host is directly attached to. The layer2 address of the default route is remembered/learned by the ARP protocol unless it is not statically configured in the host.

In accordance with the present invention, a router is defined as a device that analyses OSI layer 3 or higher protocol information to make a traffic forwarding decision.

This includes but is not limited to investigating the source and/or destination address to determine the best exit port for the packet, to determine if the packet is in profile for rate-limiting, or to do other filtering based on information in the OSI layer3 and higher protocol layers.

The Access Switching Router (ASR) is a combination of a layer2 switch and a layer3 router. It combines the capabilities of layer2 switching with advanced packet control and forwarding decisions in a layer3 router. This definition fits the definition of a router in accordance with the present invention and also incorporates the unique filtering features described herein.

The advantages of the present invention enables all Ethernet ® ports on the ASR to be configured to the same VLAN, which enables the ports to share the same IP subnet. Hence, no dividing of the subnet, for example, a 32 bit IP address, has to take place. Every time a subnet is created two addresses disappear. Those are the so called net address and the address being the subnets broadcasting address. When corporations, Internet service providers etc. connect to Internet they apply for IP addresses. An assignment of addresses is dependent on how many computers that are connected to the network, how the network is to be designed and its pace of growth in the following years.

Given an example, a company is assigned 192.168.1.0/24 as address, where /24 denotes the dimension of the subnet. As IP addresses have 32 binary bits, it is easier to provide an example in binary notation:
192.168.1.0 = 11000000 10101000 00000001 00000000
/24 equals a one decimal subnet-mask of 255.255.255.0 binary reassembling
11111111 11111111 11111111 00000000

The part of a subnet where the subnet-mask is 0, below denoted the host part, is the part that is allowed to use for setting an IP address for the single computers. The part where the subnet-mask is 1 must always be the same. Two addresses in this part may never be used for computers and these are the net-number itself when the host part only comprises binary 0, and the broadcast address when the host part only comprises binary 1. Hence:
11000000 10101000 00000001 00000000 192.168.1.0
11000000 10101000 00000001 11111111 192.168.1.255

It is not likely that 250 computers are connected to one and the same segment. Probably it consists of several segments divided into several layer2 broadcast domains, thus every layer2 domain needs one IP subnet of its own. Therefore it is necessary to divide the 256 addresses in smaller subnets. This is accomplished by further prolonging the subnet-mask, i.e., the part comprising binary 1.

### Exampel:

11000000 10101000 00000001 00000000 192.168.1.0
11111111 11111111 11111111 11000000 255.255.255.192

The subnet-mask is now intruding on two bits in the last octet. This means that there are 6 bits left for a host address which decimally reassembles 64. Hence, the 256 addresses have turned into four subnets of each 64 addresses.
11000000 10101000 00000001 00000000 192.168.1.0
11111111 11111111 11111111 11000000 255.255.255.192

11000000 10101000 00000001 01000000 192.168.1.64
11111111 11111111 11111111 11000000 255.255.255.192

11000000 10101000 00000001 10000000 192.168.1.128
11111111 11111111 11111111 11000000 255.255.255.192

11000000 10101000 00000001 11000000 192.168.1.192
11111111 11111111 11111111 11000000 255.255.255.192

Each and every one of these four subnets are having two addresses that are not allowed to use. Decimally, they are:
Subnet 192.168.1.0 forbidden 192.168.1.0 and 192.168.1.63
Subnet 192.168.1.64 forbidden 192.168.1.64 and 192.168.1.127
Subnet 192.168.1.128 forbidden 192.168.1.128 and 192.168.1.191
Subnet 192.168.1.192 forbidden 192.168.1.192 and 192.168.1.255

### Binary reassembling:

11000000 10101000 00000001 00000000 192.168.1.0
11111111 11111111 11111111 11000000255.255.255.192
11000000 10101000 00000001 00111111 192.168.1.63
11111111 11111111 11111111 11000000 255.255.255.192

11000000 10101000 00000001 01000000 192.168.1.64
1111111 11111111 11111111 11000000 255.255.255.192
11000000 10101000 00000001 01111111 192.168.1.127
11111111 11111111 11111111 11000000 255.255.255.192

11000000 10101000 00000001 10000000 192.168.1.128
11111111 11111111 11111111 11000000 255.255.255.192
11000000 10101000 00000001 10111111 192.168.1.191
11111111 11111111 11111111 11000000 255.255.255.192

11000000 10101000 00000001 11000000 192.168.1.192
11111111 11111111 11111111 11000000 255.255.255.192
11000000 10101000 00000001 11111111 192.168.1.255
11111111 11111111 11111111 11000000 255.255.255.192

It is now possible to divide one of these 64 address subnets in two parts, receiving two subnets of 32 addresses, but which each comprise two forbidden addresses:
11000000 10101000 00000001 11000000 192.168.1.192
11111111 11111111 11111111 11100000255.255.255.224
11000000 10101000 00000001 11011111 192.168.1.223
11111111 11111111 11111111 11100000 255.255.255. 224

11000000 10101000 00000001 11100000 192.168.1.224
11111111 11111111 11111111 11100000 255.255.255. 224
11000000 10101000 00000001 11111111 192.168.1.255
11111111 11111111 11111111 11100000 255.255.255. 224

In a broadband network 32 addresses are in excess for a single household. Every computer connected to a subnet is deemed to have an address, which also includes the default-gateway router, there is a demand of at least two addresses for every household, one for the computer and one for the router. If the household is in control of more than one computer, a bigger subnet is needed.

Therefore, two addresses per household requires that the smallest subnet has to have the dimension of four addresses. Binary:
11000000 10101000 00000001 10000000 192.168.1.0
11111111 11111111 11111111 11111100 255.255.255.252

Since two addresses are forbidden:
11000000 10101000 00000001 00000000 192.168.1.0
11111111 11111111 11111111 11111100 255.255.255.252

11000000 1010100000000001 00000011 192.168.1.3
11111111 11111111 11111111 11111100 255.255.255.252
the addresses left to use are 192.168.1.1 and 192.168.1.2. In the next subnet, the addresses 192.168.1.4 and 192.168.1.7 are forbidden. Addresses that can be used are 192.168.1.5 and 192.168.1.6 and so forth.

Out of the 256 addresses from the start there are 256/4 = 64 subnets or 64 customers. One half of the addresses in these kind of small subnets are retained as broadcast and net addresses, and the loss of address space is 50%.

If subnets are designed in bigger dimensions, the loss of address space decreases due to broadcast and net addresses (8 addresses per subnet provides 256/8 = 32 subnets, a 25 % loss of address space). But there are 6 useful addresses per subnet, and if the router is provided one, there are 5 addresses per household. If those 5 addresses are not fully used, because there are not more than two computers in every household, there still is an address loss as 3 addresses are not used.

Through the solution in accordance with one embodiment of the present invention, it is enabled to use 254 addresses of the 256 provided in the subnet and spread it over several premises and multiple ASRs thus covering more customers. If one customer has more computers than another customer, no extra loss of address space is introduced as the customer with the greater number of computers receives more addresses. Therefore, the loss of address space with the present invention is held at a few percentages if the network is built to optimize the address space.

According to the present invention a filter is applied which hinders any layer2 traffic between the ports belonging to the VLAN, except traffic with protocol options indicating that the data carried in the layer2 packet is IP, IPv6 or any other traffic acceptable for the purpose of communication. This means that even though the ports belong to the same layer2 broadcast domain, traffic between them is prevented from being switched based on their source and destination layer2 address.

When a client attached to a port starts to transmit, the first packet will traverse the Ethernet ® segment, including the ASR.

Whenever the client host seeks to communicate with another host it will issue an ARP request for either the default-route, if the destination is not part of the client hosts IP subnet, or the destination itself, if its destination address is on the client hosts same subnet. This ARP request is a layer2 broadcast, which typically traverses the entire VLAN. The ARP message is intercepted, in accordance with the present invention, by the ASR and prevented from being forwarded to any other port belonging to that VLAN. If the ARP request is for a destination that is present on any other port on the ASR or if the destination is known in the ASR layer3 routing table, the ASR is responding to the ARP request with its own MAC-address as next-hop. This procedure makes the client host believe, simulates, that the ASR layer2 address is the destination layer2 address to be used to reach the real layer3 destination. Thus, the client host transmits the packet to the ASR layer2 address.

If the packet is determined to be forwarded out on another of the ASR ports, based on the destination layer3 address and the content of the ASR routing table and/or address resolution table, the source-MAC address of the packet is changed to the ASR layer2 address on the egress port. The source IP address will continue to be that of the original client host address. Thereby, the receiver in the ASR remembers/learns that the source client host address maps to the ASR layer2 address and any return traffic to the source client host is directed to the ASR rather than directly to the source client MAC address. In this manner both the source and the destination client hosts are simulated to believe that the ASR MAC-address is the address of the other host and communication flow is maintained.

To be able to communicate with TCP/IP a host has to be configured with:
- an IP address
- a subnet-mask
- a default-gateway
- a name server

A name server is used to connect between names and IP addresses on the Internet.

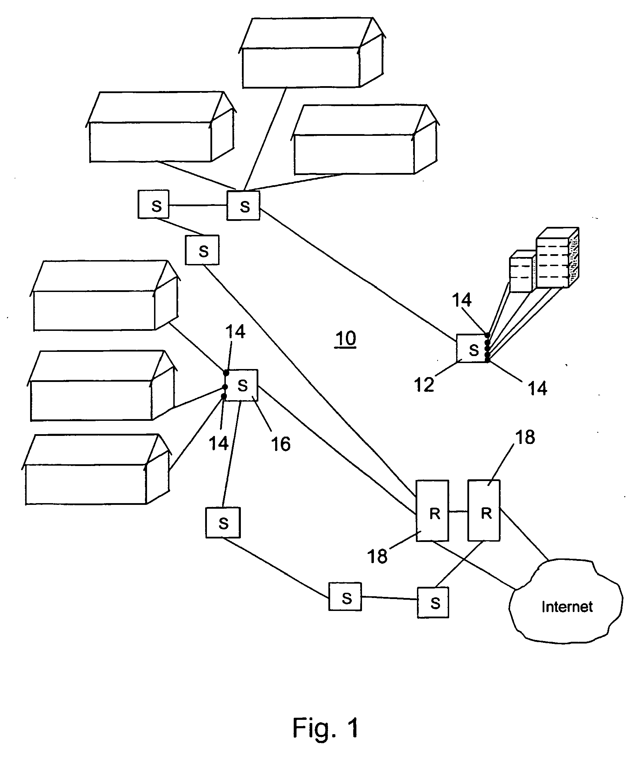

Fig. 1 schematically illustrates a residential area connected to a broadband network 10 in accordance with prior art. At switch 12 is depicted a VLAN with all ports 14 connected to it, meaning that neighbours have layer2 access between themselves. This enables one neighbour to for example browse another neighbours hard-drive. The switch 16 comprises that every port 14 belongs to a different VLAN, which requires a small IP subnet per VLAN. This is a waste of address space because every subnet introduces unusable addresses for the network and the broadcast feature. A subnet with two usable addresses also requires two unusable addresses, wasting 50 % of the address space. The devices 18 in Fig. 1 are routers.

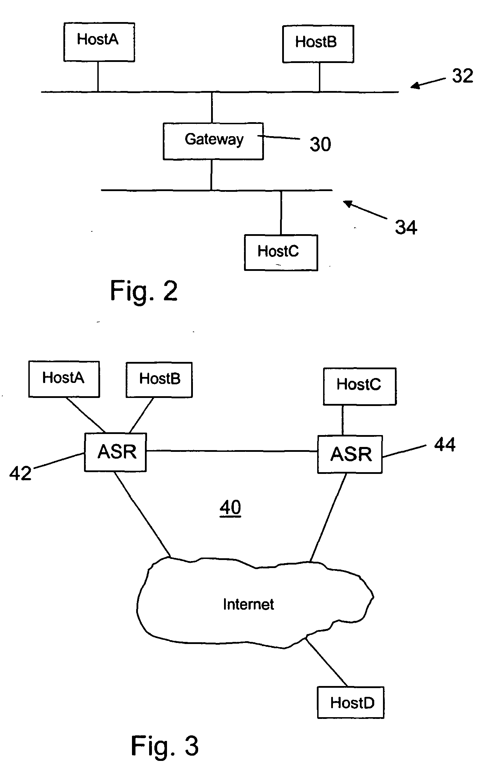

Fig. 2 schematically illustrates a gateway 30 connected between two broadband networks 32, 34 in accordance with prior art, also depicting HostA, HostB and HostC.

The following sequence describes the conventional operation of the ARP routing protocol.

The first sequence of steps 1)-9) provides an example where HostA transmits to HostB with reference to Fig. 2:
1) HostA has IP packet to send
2) HostA compares HostAs address + subnetmask with HostBs address
3) HostB is on same network as HostA
4) HostA sends ARP broadcast to Network1 requesting HostBs layer2 address.
5) HostB recognize request for its layer2 address
6) HostB responds
7) HostA now has HostBs layer2 address
8) HostA transmit data
9) HostB receives data

The second sequence of steps 1)-17) provides an example where HostA transmits to HostC with reference to Fig. 2:
1) HostA has IP packet to send
2) HostA compares HostAs address + subnetmask with HostCs address
3) HostC is not on same network as HostA
4) HostA sends ARP broadcast to Network1 requesting Gateways layer2 address
5) Gateway recognize request for its layer2 address
6) Gateway responds
7) HostA now has Gateways layer2 address
8) HostA transmit data
9) Gateway receive data
10) Gateway strips away layer2 information from packet
11) Gateway looks up HostC address in routing table and determines egress interface
12) Gateway send ARP broadcast to Network2 requesting HostCs layer2 address
13) HostC recognize request for its layer2 address
14) HostC responds
15) Gateway now has HostCs layer2 address
16) Gateway builds new layer2 header for packet and transmit data
17) HostC receives data.

If the gateway 30 had not been directly connected to Network2, step 12 would instead have been "forwarding the packet towards Network2", repeating steps 9,10, 11 and the new step 12 in every gateway along the path until the gateway that is connecting directly to Network2, receiving the packet where steps 12-17 according to the flow above would commence.

Fig. 3 schematically illustrates a broadband network 40 in accordance with the present invention, having two ASR routers 42, 44. HostA and HostB are connected to router 42 and HostC connected to router 44. Both routers 42 and 44 have a direct connection between each other, where router 42 comprises the filter of the present invention. Fig. 3 also depicts a HostD connected to the broadband network via Internet.

The filter of the present invention is provided for an open system interconnection layer2 traffic separation in at least one ASR router 42 in a broadband network 40. Al ports (not shown) in the routers 42, 44 are configured to the same VLAN. ASR 44 is a sub router to router 42 or just connected and provides the same filtering advantages in accordance with the present invention. Data packet traffic is intercepted by the router 42 comprising the filter, which is filtering data packet traffic to the ports. The filter comprises:
means for intercepting layer2 traffic from a network connected source device (HostA, HostB) for a MAC-address belonging to the virtual local area network, determining if traffic is permitted to be forwarded to other ports;
means for intercepting Address Resolution Protocol broadcasts in such traffic, responding to the broadcast to the source device regardless of if a destination device layer2 domain is the same as source device layer2 domain, the source device thus determining that the broadcast has acknowledged the layer2 address of a sought destination device, whereby the source device transmits data packets to the destination device, the router receiving the transmitted data packets;
means for determining the egress port to the destination device;
means for determining the layer2 address of the destination device;
means for adjusting the layer2 header from the received data packet, the means for setting the source layer2 address, setting the routers source address for the data packets, the means for determining the layer2 address of the destination device, setting the destination layer2 address to that of the destination device, transmitting the data packet to the destination device.

The filter of the present invention is thus simulating that if the source device and destination device is in the same layer2 domain, the router layer2 address is the actual destination address both for the source and destination device, or simulating that if the source device and destination device are not in the same layer2 domain but in the same layer3 subnet, the router layer2 address is the actual destination layer2 address for the source to the destination.

It is appreciated that the means of the present invention preferably are software building blocks in a router or a combination of hardware and software.

In the following three scenarios for packet flow in accordance with the present invention and with reference to Fig. 3 are provided.

It is to be noted that in IP routing, the encapsulation and decapsulation of layer2 headers on an IP packet is a conventional procedure. The IP header with the IP source and destination address is left untouched while the layer2 headers for Ethernet, TokenRing, FrameRelay, ATM or other layer2 technology that is used changes. Because the layer2 protocol is not routable, the source address is always set to that of the device transmitting the packet. This is conventional.

The first scenario with sequence steps 1) to 13) describes packet transmission from HostA to HostB. Both hosts are connected to ports in the same ASR. The ports are configured to belong to the same broadcast domain (VLAN) but port protection with additional features is enabled on the ASR in accordance with the present invention.

### First scenario

1) HostA has IP packet to send
2) HostA compares its address + subnetmask with HostB and determines they are on the same subnet.
3) HostA sends ARP broadcast for HostBs address
4) Because of filters between the ASR 42 ports, the broadcast cannot reach HostB.
5) The ASR intercepts the ARP broadcast and determines it knows where HostB is located.
6) The ASR responds to the ARP request for HostB, setting its own layer2 address as the address for HostB
7) HostA receives the ARP response and think it now know the layer2 address for HostB.
8) HostA transmit data
9) ASR 42 receive data.
10) ASR 42 removes layer2 information and determine the egress port for HostB
11) ASR 42 sets its own layer2 address as source for the packet and encapsulates the packet for HostB.
12) ASR 42 transmit data
13) HostB receives the data from HostA.

Because that the ASR 42 layer2 address is set as source, HostB believes that the layer2 address of ASR 42 is that of HostA. Likewise, due to the ARP response, HostA will believe that the layer2 address of ASR 42 is that of HostB.

The second scenario with sequence steps 1) to 18) describes packet transmission from HostA to HostC. The hosts are connected to ports on different ASRs. But the address sharing features of the ASR and central management system agreed the hosts to receive IP addresses by DHCP from the same IP subnet. The ASRs have exchanged routing information informing each other about connected hosts.

### Second scenario

1) HostA has IP packet to send
2) HostA compares its address + subnetmask with HostC and determines they are on the same subnet.
3) HostA sends ARP broadcast for HostCs address
4) Because of filters between ASR 42 ports, the broadcast do not reach any other port on the ASR.
5) ASR 42 intercepts the ARP broadcast and determines it knows where HostC is located.
6) ASR 42 responds to the ARP request for HostC, setting its own layer2 address as the address for HostC
7) HostA receives the ARP response and think it now know the layer2 address for HostC.
8) HostA transmits the packet
9) ASR 42 receives the packet.
10) ASR 42 removes layer2 information and determine the egress port for HostC.
11) ASR 42 encapsulates the packet with appropriate layer2 headers for the link to ASR 44.
12) ASR 42 forwards the packet towards ASR 44
13) ASR 44 receives the packet.
14) ASR 44 removes layer2 encapsulation used on the link from ASR 42.
15) ASR 44 determines the egress port for the packet towards HostC.
16) ASR 44 encapsulates the packet with layer2 headers, setting its own layer2 address as source.
17) ASR 44 transmit data
18) HostC receives the data from HostA.

Because of that the ASR 42 is responding to the ARP request, HostA will believe that the layer2 address of ASR 42 is that of the HostC. Because of the ASR 44 setting its layer2 address as source for the packet to HostC in the final steps above. HostC thus believes that the layer2 address of ASR 44 is that of the HostA.

The third scenario with sequence steps 1) to 15) describes packet transmission from HostA to HostD. HostA is connected to a port on ASR 42. HostD is connected somewhere on the Internet.

### Third scenario

1) HostA has IP packet to send
2) HostA compares its address + subnetmask with HostD and determines they are not on the same subnet.
3) HostA sends ARP broadcast for default-gateway address
4) Because of filters between the ASR 42 ports, the broadcast cannot reach any other port on the ASR.
5) The ASR intercepts the ARP broadcast and determines it is the default-gateway.
6) The ASR responds to the ARP request for default-gateway with its own layer2 address.
7) HostA receives the ARP response and think it now know the layer2 address for the defalt gateway
8) HostA transmit data
9) ASR 42 receive data.
10) ASR 42 removes layer2 information and determine the egress port for HostD.
11) ASR 42 encapsulates the packet with appropriate layer2 headers for the link towards HostD
12) Gateways along the path between ASR 42 and HostD repeat steps 9-11.
13) The gateway connecting HostD receives the packet
14) The gateway performs ARP lookup and forwards the packet towards HostD according to Internet standards.
15) HostD receives the data.

The present invention has been described through examples and embodiments not intended to limit the scope of protection, whereby a person skilled in the art is able to derive further embodiments by the attached set of claims.

## Claims

1. A filter for an open system interconnection layer2 traffic separation in at least one Access Switching Router (42, 44) in a network (40); having ports in the routers (42, 44) configured to the same virtual local area network, said filter filtering data packet traffic to said ports, comprising:
means for intercepting layer2 traffic from a network connected source device (HostA, HostB) for a Media Access Control address belonging to said virtual local area network, determining if traffic is permitted to be forwarded to other ports;
means for intercepting Address Resolution Protocol broadcasts in such traffic, responding to said broadcast to said source device(HostA, HostB) regardless of if a destination device layer2 domain is the same as source device layer2 domain, said source device (HostA, HostB) thus determining that the broadcast has acknowledged the layer2 address of a sought destination device (HostC, HostD), whereby the source device (HostA, HostB) transmits data packets to the destination device (HostC, HostD), said routers receiving said transmitted data packets;
means for determining the egress port to said destination device;
means for determining the layer2 address of said destination device (HostC, HostD);
**characterized by** further comprising:
means for adjusting the layer2 header from said received data packet, said means for setting the source layer2 address, setting said routers source address for the data packets, said means for determining the layer2 address of the destination device (HostC, HostD), setting the destination layer2 address to that of the destination device (HostC, HostD), transmitting the data packet to the destination device (HostC, HostD); and
thus simulating that if the source device (HostA, HostB) and destination device (HostC, HostD) is in the same layer2 domain, the router layer2 address is the actual destination address both for the source and destination device, or simulating that if the source device and destination device are not in the same layer2 domain but in the same layer3 subnet, the router layer2 address is the actual destination layer2 address for the source to the destination.

2. A filter according to claim 1, **characterized in that** a port that resides in a sub router (42, 44) is provided with said routers (42, 44) layer2 address when addressing the destination device (HostC).

3. A filter according to claims 1 or 2, **characterized in** a the router (42, 44) is investigating the source and/or destination address to determine the best exit port for the packet, to determine if the packet is in profile for rate-limiting, or to do other filtering based on information in the open system interconnection layer3 and higher protocol layers.

4. A filter according to claims 1-3, **characterized in that** a router (42, 44) is a combination of a layer2 switch and a layer3 router, combining the capabilities of layer2 switching with advanced packet control and forwarding decisions in a layer3 router.

5. A filter according to claims 1-4, **characterized in that** it is providing the use of one IP subnet, spreading it over several premises and a multiple of Access Switching Router and the same subnet in multiple layer2 domains, whereby it is covering more customers.

6. A filter according to claim 5, **characterized in that** it is providing a customer having multiple computers to receive more addresses.

7. A method for a filter for an open system interconnection layer2 traffic separation in at least one Access Switching Router (42, 44) in a network (40), having ports in the routers (42, 44) configured to the same virtual local area network, said filter filtering data packet traffic to said ports, comprising:
intercepting layer2 traffic from a network connected source device (HostA, HostB) for a Media Access Control address belonging to said virtual local area network, determining if traffic is permitted to be forwarded to other ports;
intercepting Address Resolution Protocol broadcasts in such traffic, responding to said broadcast to said source device(HostA, HostB) regardless of if a destination device layer2 domain is the same as source device layer2 domain, said source device (HostA, HostB) thus determining that the broadcast has acknowledged the layer2 address of a sought destination device (HostC, HostD), whereby the source device (HostA, HostB) transmits data packets to the destination device (HostC, HostD), said routers receiving said transmitted data packets;
determining the egress port to said destination device;
determining the layer2 address of said destination device (HostC, HostD);
**characterized by** further comprising:
adjusting the layer2 header from said received data packet, said means for setting the source layer2 address, setting said routers source address for the data packets, said means for determining the layer2 address of the destination device (HostC, HostD), setting the destination layer2 address to that of the destination device (HostC, HostD), transmitting the data packet to the destination device (HostC, HostD); and
thus simulating that if the source device (HostA, HostB) and destination device (HostC, HostD) is in the same layer2 domain, the router layer2 address is the actual destination address both for the source and destination device, or simulating that if the source device and destination device are not in the same layer2 domain but in the same layer3 subnet, the router layer2 address is the actual destination layer2 address for the source to the destination.

8. A method for a filter according to claim 7, **characterized in that** a port that resides in a sub router (42, 44) is provided with said routers (42, 44) layer2 address when addressing the destination device (HostC).

9. A method for a filter according to claims 7 or 8, **characterized in that** a router (42, 44) is investigating the source and/or destination address to determine the best exit port for the packet, to determine if the packet is in profile for rate-limiting, or to do other filtering based on information in the open system interconnection layer3 and higher protocol layers.

10. A method for a filter according to claims 7-9, **characterized in that** a router (42, 44) is a combination of a layer2 switch and a layer3 router, combining the capabilities of layer2 switching with advanced packet control and forwarding decisions in a layer3 router.

11. A method for a filter according to claims 7-10, **characterized in that** it is providing the use of one IP subnet, spreading it over several premises and a multiple of Access Switching Router and the same subnet in multiple layer2 domains, whereby it is covering more customers.

12. A method for a filter according to claim 11, **characterized in that** it is providing a customer having multiple computers to receive more addresses.

## Patentansprüche

1. Filter zur Trennung des Layer-2-Verkehrs nach OSI (Open System Interconnection) in mindestens einem Access Switching Router (42, 44) in einem Netzwerk (40), mit Ports in den Routern (42, 44), die auf dasselbe virtuelle lokale Netzwerk konfiguriert sind, wobei das Filter einen Datenpaketverkehr an die Ports filtert, beinhaltend:
Mittel zum Abfangen eines Layer-2-Verkehrs von einer mit dem Netzwerk verbundenen Quellvorrichtung (HostA, HostB) für eine dem virtuellen lokalen Netzwerk zugehörige Media Access Control-Adresse (MAC-Adresse), wobei bestimmt wird, ob der Verkehr an andere Ports weitergeleitet werden darf;
Mittel zum Abfangen von Address Resolution Protocol-Broadcasts (ARP-Broadcasts) in dem Verkehr, wobei an die Quellvorrichtung (HostA, HostB) auf den Broadcast unabhängig davon geantwortet wird, ob eine Layer-2-Domäne der Zielvorrichtung dieselbe ist wie die Layer-2-Domäne der Quellvorrichtung, wodurch die Quellvorrichtung (HostA, HostB) feststellt, dass der Broadcast die Layer-2-Adresse einer gesuchten Zielvorrichtung (HostC, HostD) bestätigt hat und die Quellvorrichtung (HostA, HostB) Datenpakete an die Zielvorrichtung (HostC, HostD) sendet und die Router diese Datenpakete empfangen;
Mittel zur Bestimmung des Ausgangsports zu der Zielvorrichtung;
Mittel zur Bestimmung der Layer-2-Adresse der Zielvorrichtung (HostC, HostD)
**gekennzeichnet durch**:
Mittel zum Anpassen des Layer-2-Headers des empfangenen Datenpakets, wobei die Mittel zur Festsetzung der Layer-2-Quelladresse die Quelladresse der Router für die Datenpakete festsetzen, die Mittel zur Bestimmung der Layer-2-Adresse der Zielvorrichtung (HostC, HostD) die Layer-2-Zieladresse auf diejenige der Zielvorrichtung (HostC, HostD) setzen und das Datenpaket an die Zielvorrichtung (HostC, HostD) gesendet wird; und
wodurch simuliert wird, wenn sich die Quellvorrichtung (HostA, HostB) und die Zielvorrichtung (HostC, HostD) in derselben Layer-2-Domäne befinden, dass die Router-Layer-2-Adresse die tatsächliche Zieladresse sowohl für die Quellals auch für die Zielvorrichtung ist, oder wodurch simuliert wird, wenn sich die Quellvorrichtung und die Zielvorrichtung nicht in derselben Layer-2-Domäne, aber in demselben Layer-3-Subnetz befinden, dass die Router-Layer-2-Adresse die tatsächliche Layer-2-Zieladresse für die Quelle an das Ziel ist.

2. Filter nach Anspruch 1, **dadurch gekennzeichnet, dass** ein Port, der in einem Subrouter (42, 44) liegt, beim Adressieren der Zielvorrichtung (HostC) mit der Layer-2-Adresse der Router (42, 44) versehen wird.

3. Filter nach Anspruch 1 oder 2, **dadurch gekennzeichnet, dass** der Router (42, 44) die Quell- und/oder Zieladresse untersucht, zum Bestimmen des besten Ausgangsports für das Paket, zum Bestimmen, ob das Paket mit dem Profil zur Bandbreitenbegrenzung übereinstimmt, oder zum Durchführen anderer Filterungen auf der Basis von Informationen im OSI-Layer 3 oder in höheren Protokollschichten.

4. Filter nach einem der Ansprüche 1 bis 3, **dadurch gekennzeichnet, dass** ein Router (42, 44) eine Kombination aus einem Layer-2-Switch und einem Layer-3-Router ist, der die Fähigkeiten der Layer-2-Vermittlung mit Entscheidungen bzgl. Advanced-Packet-Control und Forwarding in dem Layer-3-Router vereint.

5. Filter nach einem der Ansprüche 1 bis 4, **dadurch gekennzeichnet, dass** es die Verwendung eines IP-Subnetzes gestattet und dieses über mehrere Betriebsorte und mehrfache Access Switching Router und das gleiche Subnetz in mehrere Layer-2-Domänen verteilt, wodurch es mehr Kunden abdeckt.

6. Filter nach Anspruch 5, **dadurch gekennzeichnet, dass** es einem Kunden mit mehreren Computern gestattet, mehr Adressen zu erhalten.

7. Verfahren für ein Filter zur Trennung des Layer-2-Verkehrs nach OSI (Open System Interconnection) in mindestens einem Access Switching Router (42, 44) in einem Netzwerk (40), mit Ports in den Routern (42, 44), die auf dasselbe virtuelle lokale Netzwerk konfiguriert sind, wobei das Filter einen Datenpaketverkehr an die genannten Ports filtert, beinhaltend:
Abfangen von Layer-2-Verkehr von einer mit dem Netzwerk verbundenen Quellvorrichtung (HostA, HostB) für eine dem virtuellen lokalen Netzwerk zugehörige Media Access Control-Adresse (MAC-Adresse), wobei bestimmt wird, ob der Verkehr an andere Ports weitergeleitet werden darf;
Abfangen von Address Resolution Protocol-Broadcasts (ARP-Broadcasts) in dem Verkehr, wobei an die Quellvorrichtung (HostA, HostB) auf den Broadcast unabhängig davon geantwortet wird, ob eine Layer-2-Domäne der Zielvorrichtung dieselbe ist wie die Layer-2-Domäne der Quellvorrichtung, wodurch die Quellvorrichtung (HostA, HostB) feststellt, dass der Broadcast die Layer-2-Adresse einer gesuchten Zielvorrichtung (HostC, HostD) bestätigt hat und die Quellvorrichtung (HostA, HostB) Datenpakete an die Zielvorrichtung (HostC, HostD) sendet und die Router diese Datenpakete empfangen;
Bestimmen des Ausgangsports zu der Zielvorrichtung;
Bestimmen der Layer-2-Adresse der Zielvorrichtung (HostC, HostD);
**gekennzeichnet durch**:
Anpassen des Layer-2-Headers des empfangenen Datenpakets, wobei die Mittel zur Festsetzung der Layer-2-Quelladresse die Quelladresse der Router für die Datenpakete festsetzen, die Mittel zur Bestimmung der Layer-2-Adresse der Zielvorrichtung (HostC, HostD) die Layer-2-Zieladresse auf diejenige der Zielvorrichtung (HostC, HostD) setzen und das Datenpaket an die Zielvorrichtung (HostC, HostD) gesendet wird; und
wodurch simuliert wird, wenn sich die Quellvorrichtung (HostA, HostB) und die Zielvorrichtung (HostC, HostD) in derselben Layer-2-Domäne befinden, dass die Router-Layer-2-Adresse die tatsächliche Zieladresse sowohl für die Quellals auch für die Zielvorrichtung ist, oder wodurch simuliert wird, wenn sich die Quellvorrichtung und die Zielvorrichtung nicht in derselben Layer-2-Domäne, aber in demselben Layer-3-Subnetz befinden, dass die Router-Layer-2-Adresse die tatsächliche Layer-2-Zieladresse für die Quelle an das Ziel ist.

8. Verfahren für ein Filter nach Anspruch 7, **dadurch gekennzeichnet, dass** ein Port, der in einem Subrouter (42, 44) liegt, beim Adressieren der Zielvorrichtung (HostC) mit der Layer-2-Adresse der Router (42, 44) versehen wird.

9. Verfahren für ein Filter nach Anspruch 7 oder 8, **dadurch gekennzeichnet, dass** ein Router (42, 44) die Quell- und/oder Zieladresse untersucht, zum Bestimmen des besten Ausgangsports für das Paket, zum Bestimmen, ob das Paket mit dem Profil zur Bandbreitenbegrenzung übereinstimmt, oder zum Durchführen anderer Filterungen auf der Basis von Informationen im OSI-Layer 3 oder in höheren Protokollschichten.

10. Verfahren für ein Filter nach einem der Ansprüche 7 bis 9, **dadurch gekennzeichnet, dass** ein Router (42, 44) eine Kombination aus einem Layer-2-Switch und einem Layer-3-Router ist, der die Fähigkeiten der Layer-2-Vermittlung mit Entscheidungen bzgl. Advanced-Packet-Control und Forwarding in dem Layer-3-Router vereint.

11. Verfahren für ein Filter nach einem der Ansprüche 7 bis 10, **dadurch gekennzeichnet, dass** es die Verwendung eines IP-Subnetzes gestattet und dieses über mehrere Betriebsorte und mehrfache Access Switching Router und das gleiche Subnetz in mehreren Layer-2-Domänen verteilt, wodurch es mehr Kunden abdeckt.

12. Verfahren für ein Filter nach Anspruch 11, **dadurch gekennzeichnet, dass** es einem Kunden mit mehreren Computern gestattet, mehr Adressen zu erhalten.

## Revendications

1. Filtre pour une séparation du trafic en couche 2 OSI (interconnection de systèmes ouverts) dans au moins un Commutateur-Routeur de Périphérie (42, 44) dans un réseau (40), avec des ports dans les routeurs (42, 44) qui sont configurés sur le même réseau local virtuel, ledit filtre filtrant le trafic de paquets de données vers lesdits ports, comprenant:
des moyens pour intercepter le trafic en couche 2 provenant d'un dispositif source (HostA, HostB) connecté au réseau pour une adresse MAC (Medium Access Control) qui appartient audit réseau local virtuel, déterminant si le trafic peut être réacheminé à d'autres ports;
des moyens pour intercepter des diffusions générales ARP (Address Resolution Protocol) dans ce trafic, répondant à ladite diffusion générale audit dispositif source (HostA, HostB) sans considérer si un domaine de couche 2 du dispositif destinataire est le même que le domaine de couche 2 du dispositif source, ledit dispositif source (HostA, HostB) déterminant ainsi que la diffusion générale a acquitté l'adresse de couche 2 d'un dispositif destinataire (HostC, HostD) recherché, le dispositif source (HostA, HostB) transmettant alors des paquets de données au dispositif destinataire (HostC, HostD) et lesdits routeurs recevant lesdits paquets de données transmis;
des moyens pour déterminer le port de sortie vers ledit dispositif destinataire;
des moyens pour déterminer l'adresse de couche 2 dudit dispositif destinataire (HostC, HostD);
**caractérisé en ce qu'**il comprend en outre:
des moyens pour adapter l'en-tête de couche 2 dudit paquet de données reçu, lesdits moyens d'affectation de l'adresse d'origine de couche 2 affectant aux paquets de données l'adresse d'origine dudit routeur, lesdits moyens d'affectation de l'adresse de couche 2 du dispositif destinataire (HostC, HostD) y affectant comme adresse de destination de couche 2 celle du dispositif destinataire (HostC, HostD), transmettant le paquet de données au dispositif destinataire (HostC, HostD); et
simulant ainsi, si le dispositif source (HostA, HostB) et le dispositif destinataire (HostC, HostD) sont dans le même domaine de couche 2, que l'adresse de couche 2 du routeur est l'adresse de destination effective à la fois pour le dispositif source et le dispositif destinataire, ou simulant, si le dispositif source et le dispositif destinataire ne sont pas dans le même domaine de couche 2 mais dans le même sous-réseau de couche 3, l'adresse de couche 2 du routeur est l'adresse de destination de couche 2 effective pour la source vers la destination.

2. Filtre selon la revendication 1, **caractérisé en ce qu'**un port qui réside dans un sous-routeur (42, 44) est pourvu de l'adresse de couche 2 desdits routeurs (42, 44) lorsqu'il s'adresse au dispositif destinataire (HostC).

3. Filtre selon la revendication 1 ou 2, **caractérisé en ce que** le routeur (42, 44) examine l'adresse d'origine et/ou l'adresse de destination afin de déterminer le meilleur port de sortie pour le paquet, de déterminer si le paquet a le profil pour le rate-limiting ou d'effectuer d'autres filtrages sur la base d'informations dans la couche 3 OSI ou des couches supérieures du protocole.

4. Filtre selon l'une des revendications 1 à 3, **caractérisé en ce qu'**un routeur (42, 44) est une combinaison d'un commutateur de couche 2 et d'un routeur de couche 3, réunissant les capacités de la commutation en couche 2 et de décisions de contrôle et de réacheminement avancés de paquets dans un routeur de couche 3.

5. Filtre selon l'une des revendications 1 à 4, **caractérisé en ce qu'**il permet l'utilisation d'un sous-réseau IP, le répartissant sur plusieurs emplacements et des Commutateurs-Rauteurs de Périphérie multiples et le même sous-réseau dans des domaines de couche 2 multiples, couvrant ainsi plus de clients.

6. Filtre selon la revendication 5, **caractérisé en ce qu'**il permet à un client ayant plusieurs ordinateurs de recevoir plus d'adresses.

7. Procédé pour un filtre pour une séparation du trafic en couche 2 OSI (interconnection de systèmes ouverts) dans au moins un Commutateur-Routeur de Périphérie (42, 44) dans un réseau (40), avec des ports dans les routeurs (42, 44) qui sont configurés sur le même réseau local virtuel, ledit filtre filtrant le trafic de paquets de données vers lesdits ports, comprenant:
le fait d'intercepter le trafic en couche 2 provenant d'un dispositif source (HostA, HostB) connecté au réseau pour une adresse MAC (Medium Access Control) qui appartient audit réseau local virtuel, déterminant si le trafic peut être réacheminé à d'autres ports;
le fait d'intercepter des diffusions générales ARP (Address Resolution Protocol) dans ce trafic, répondant à ladite diffusion générale audit dispositif source (HostA, HostB) sans considérer si un domaine de couche 2 du dispositif destinataire est le même que le domaine de couche 2 du dispositif source, ledit dispositif source (HostA, HostB) déterminant ainsi que la diffusion générale a acquitté l'adresse de couche 2 d'un dispositif destinataire (HostC, HostD) recherché, le dispositif source (HostA, HostB) transmettant alors des paquets de données au dispositif destinataire (HostC, HostD) et lesdits routeurs recevant lesdits paquets de données transmis;
le fait de déterminer le port de sortie vers ledit dispositif destinataire;
le fait de déterminer l'adresse de couche 2 dudit dispositif destinataire (HostC, HostD);
**caractérisé en ce qu'**il comprend en outre:
le fait d'adapter l'en-tête de couche 2 dudit paquet de données reçu, lesdits moyens d'affectation de l'adresse d'origine de couche 2 affectant aux paquets de données l'adresse d'origine dudit routeur, lesdits moyens d'affectation de l'adresse de couche 2 du dispositif destinataire (HostC, HostD) y affectant comme adresse de destination de couche 2 celle du dispositif destinataire (HostC, HostD), transmettant le paquet de données au dispositif destinataire (HostC, HostD); et
simulant ainsi, si le dispositif source (HostA, HostB) et le dispositif destinataire (HostC, HostD) sont dans le même domaine de couche 2, que l'adresse de couche 2 du routeur est l'adresse de destination effective à la fois pour le dispositif source et le dispositif destinataire, ou simulant, si le dispositif source et le dispositif destinataire ne sont pas dans le même domaine de couche 2 mais dans le même sous-réseau de couche 3, l'adresse de couche 2 du routeur est l'adresse de destination de couche 2 effective pour la source vers la destination.

8. Procédé pour un filtre selon la revendication 7, **caractérisé en ce qu'**un port qui réside dans un sous-routeur (42, 44) est pourvu de l'adresse de couche 2 desdits routeurs (42, 44) lorsqu'il s'adresse au dispositif destinataire (HostC).

9. Procédé pour un filtre selon la revendication 7 ou 8, **caractérisé en ce qu'**un routeur (42, 44) examine l'adresse d'origine et/ou l'adresse de destination afin de déterminer le meilleur port de sortie pour le paquet, de déterminer si le paquet a le profil pour le ratiocination ou d'effectuer d'autres filtrages sur la base d'informations dans la couche 3 OSI ou des couches supérieures du protocole.

10. Procédé pour un filtre selon l'une des revendications 7 à 9, **caractérisé en ce qu'**un routeur (42, 44) est une combinaison d'un commutateur de couche 2 et d'un routeur de couche 3, réunissant les capacités de la commutation en couche 2 et de décisions de contrôle et de réacheminement avancés de paquets dans un routeur de couche 3.

11. Procédé pour un filtre selon l'une des revendications 7 à 10, **caractérisé en ce qu'**il permet l'utilisation d'un sous-réseau IP, le répartissant sur plusieurs emplacements et des Commutateurs-Routeurs de Périphérie multiples et le même sous-réseau dans des domaines de couche 2 multiples, couvrant ainsi plus de clients.

12. Procédé pour un filtre selon la revendication 11, **caractérisé en ce qu'**il permet à un client ayant plusieurs ordinateurs de recevoir plus d'adresses.
